(19) Europäisches Patentamt
European Patent Office
Office européen des brevets

(11) EP 1 878 603 A1

(12) EUROPEAN PATENT APPLICATION

(43) Date of publication:
16.01.2008 Bulletin 2008/03

(51) Int Cl.:
*B60K 15/03* (2006.01)

(21) Application number: 07111902.8

(22) Date of filing: 06.07.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK YU

(30) Priority: 10.07.2006 JP 2006189340

(71) Applicant: NISSAN MOTOR CO., LTD.
Yokohama-shi,
Kanagawa 221-0023 (JP)

(72) Inventor: Date, Takayuki
Atsugi-shi Kanagawa 243-0192 (JP)

(74) Representative: Holmes, Matthew William et al
Nissan Motor Manufacturing (UK) Ltd
Intellectual Property Department
Nissan Technical Centre Europe
Cranfield Technology Park
Cranfield, Bedfordshire MK43 0DB (GB)

(54) **A Method of Adjusting the Capacity of a Tank and such a Tank**

(57) A method of adjusting a capacity of a tank (1), including providing a mold assembly (20) for the tank, the mold assembly configured to form the tank (1) having a first full capacity (A), and installing an insert block (31,32) in a cavity of the mold assembly, the mold assembly and insert block configured to form a tank having a second full capacity (B), the second full capacity (B) being less than the first full capacity (A). A tank (1) includes a tank main body, and an insert portion (10) extending substantially vertically within the tank main body. A ratio between a substantially horizontal cross-sectional area of the insert portion, and a substantially horizontal cross-sectional area of an inside of the tank main body from which the cross-sectional area of the insert portion is removed, is substantially constant.

## FIG.1

**Description**

The present invention relates generally to a tank and particularly, but not exclusively to a method of adjusting the capacity of a tank, a method of producing a tank by the adjusting method and, a tank produced by such methods. Aspects of the invention relate to a tank, to a method and to a vehicle.

In recent years, there has been a tendency to share a vehicle platform having a basic automotive body design portion among a plurality of kinds of vehicles. When the platform is shared in this manner, a fuel tank of the same specification can also be shared. However, if a fuel tank is shared, the full tank capacity for some vehicles must be changed in relation to the vehicle weight and cruising distance.

The amount of fuel in a fuel tank can be confirmed by a fuel gauge disposed at an instrument panel, the fuel gauge being adapted to measure a height of the surface of the fuel by using a float and a potentiometer, and to indicate a measured value at the gauge. Specifically, the float moves upward and downward in response to a variation of a height of the surface of the fuel, and the potentiometer recognizes the position of the float as a variation of electric resistance and indicates the variation of the resistance value by the fuel gauge.

However, in a conventional automotive vehicle in which a platform is shared, a full tank capacity of a commonly used tank is changed. For example, if the full tank capacity is decreased, a full tank height is naturally lowered such that a lowered full tank fuel surface position, i.e., a lowered float position, is indicated as full by a fuel gauge.

For this reason, when the full tank capacity is decreased, a corresponding new fuel gauge needs to be provided - for example, a resistance base plate and a float arm needs to be provided separately, thus increasing costs.

It is an aim of the present invention to address this issue and to improve upon known technology. Embodiments of the invention may provide a method of adjusting a tank capacity, which enables sharing of a fuel gauge, and a tank produced by using the adjusting method. Other aims and advantages of the invention will become apparent from the following description, claims and drawings.

Aspects of the invention therefore provide a tank, a method and a vehicle as claimed in the appended claims.

According to another aspect of the invention there is provided a method of adjusting a capacity of a tank, comprising providing a mold assembly for the tank, the mold assembly configured to form the tank having a first full capacity and installing an insert block in a cavity of the mold assembly, the mold assembly and insert block configured to form a tank having a second full capacity, the second full capacity being less than the first full capacity.

In an embodiment, the insert block is detachably installed in the cavity.

In an embodiment, a substantially horizontal cross-sectional area of the insert block with respect to a height direction of the tank is designed such that a ratio, of a substantially horizontal area of liquid at any of a plurality of heights of the tank, between when the insert block is provided and when the insert block is not provided, is substantially equal to a ratio between the first full capacity of the tank and the second full capacity of the tank.

In an embodiment, the mold assembly comprises an upper mold member and a lower mold member and the insert block comprises an upper mold insert block detachably attached to the upper mold member and protruding toward the lower mold member, and a lower mold insert block detachably attached to the lower mold member and protruding toward the upper mold member.

In an embodiment, a base end portion of the upper mold insert block and a base end portion of the lower mold insert block are configured to have a minimum draft angle and a substantially horizontal cross-sectional area of each insert block is adjusted at a leading end portion of the upper mold insert block and a leading end portion of the lower mold insert block.

According to a further aspect of the invention there is provided a tank comprising a tank main body and an insert portion extending substantially vertically within the tank main body, wherein a ratio between a substantially horizontal cross-sectional area of the insert portion, and a substantially horizontal cross-sectional area of an inside of the tank main body from which the cross-sectional area of the insert portion is removed, is substantially constant.

In an embodiment, the tank main body defines a first full capacity without the insert portion, and the tank main body defines a second full capacity with the insert portion, the first full capacity and the second full capacity attaining substantially the same full tank height.

In an embodiment, the insert portion comprises a plurality of insert sections, including an upper insert section extending from an upper side to a lower side of the tank main body, and a lower insert section extending from the lower side to the upper side of the tank main body.

In an embodiment, the insert portion is integral at a leading end with the tank main body.

The tank may comprise a liquid level gauge that determines that the tank is full, whether the tank is configured without the insert portion, or with the insert portion.

According to a still further aspect of the invention there is provided a tank comprising a tank main body and liquid displacement means extending substantially vertically within the tank main body, wherein a ratio between a substantially horizontal cross-sectional area of the liquid displacement means, and a substantially horizontal cross-sectional area of an inside of the tank main body from which the cross-sectional area of the liquid displacement means is removed, is substantially constant.

For example, a method of adjusting a capacity of a tank may comprise providing a mold assembly for the tank, the mold assembly configured to form the tank having a first full capacity, and installing an insert block in a cavity of the mold assembly, the mold assembly and insert block configured to form a tank having a second full capacity, the second full capacity being less than the first full capacity.

In an embodiment, a tank comprises a tank main body and an insert portion extending substantially vertically within the tank main body. A ratio between a substantially horizontal cross-sectional area of the insert portion and a substantially horizontal cross-sectional area of an inside of the tank main body from which the cross-sectional area of the insert portion is removed is substantially constant.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:

FIG. 1 is a perspective view of a tank according to an embodiment of the invention;

FIG. 2 is an enlarged sectional view taken along the line II-II of FIG. 1;

FIG. 3 is a sectional view of a mold assembly for molding the tank of Fig. 1; and

FIG. 4 is a diagram representing a relation between a tank of a first full capacity or a second full capacity according to the embodiment, and a fuel gauge.

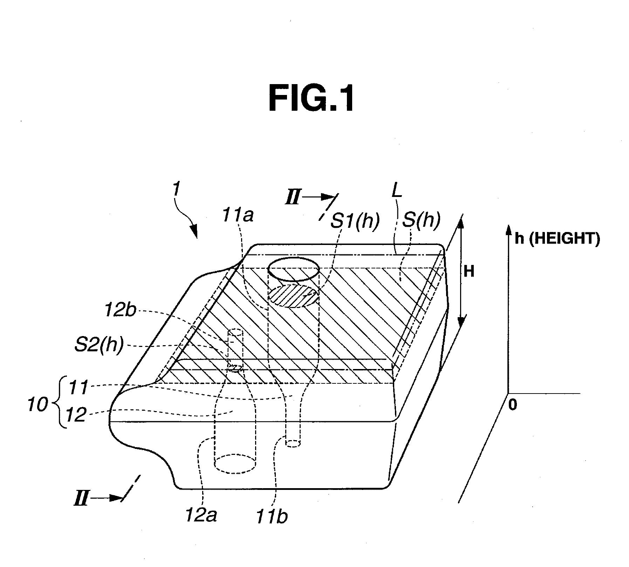

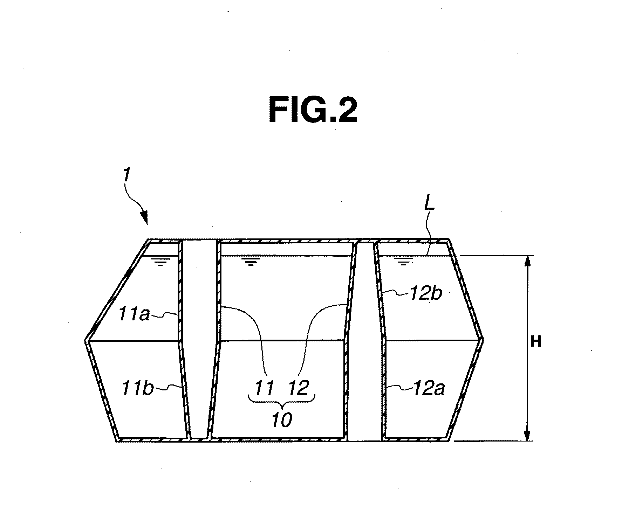

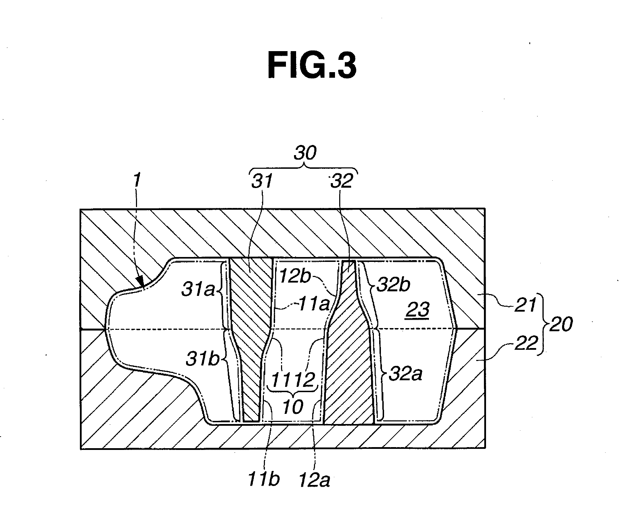

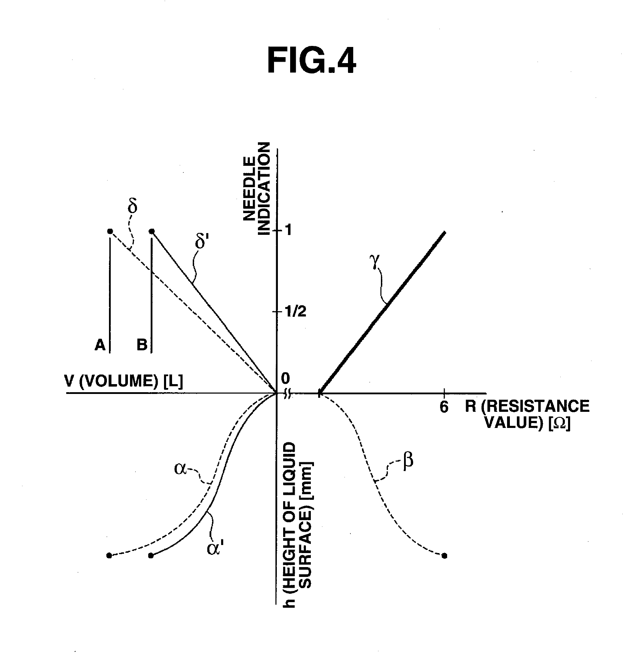

FIGS. 1 to 4 show a method of producing a tank, and a tank produced by the method according to an embodiment of the invention, wherein FIG. 1 is a perspective view of a tank, FIG. 2 is an enlarged sectional view taken along the line II-II of FIG. 1, FIG. 3 is a sectional view of a mold assembly for molding the tank, and FIG. 4 is a diagram representing a relation between a tank of a first full capacity or a second full capacity, and a fuel gauge. As used herein, a full tank height indicates a height of a liquid surface from a bottom surface of a tank when the tank is full.

FIG. 1 illustrates a tank 1 having a basic, first full tank capacity A. The tank 1 is adapted for use with a shared automobile platform, and particularly a vehicle that requires the full tank capacity A of the tank 1 to be decreased.

The tank 1 is integrally molded from synthetic resin (e.g. parison) formed in a closed space by blow molding or the like. An insert portion 10 is provided inside the tank 1 as shown in FIG. 2 to decrease the capacity inside the tank 1 and produce a second full capacity B so that the first full capacity A and the second full capacity B attain nearly the same full tank height H.

The method of producing the above-described tank 1 includes providing the insert portion 10 inside the tank 1 of the first full capacity A to decrease the capacity inside the tank 1 and provide the second full capacity B, and determining the shape of the insert portion 10 so that the first full capacity A and the second full capacity B attain nearly the same full tank height H. In this connection, the full tank height H is the height of the liquid surface from the bottom surface of the tank 1.

The insert portion 10 includes two bottle-shaped insert sections, i.e., a first insert section 11 and a second insert section 12 having at one vertical end side straight tubular parts 11 a and 12a, and at the other end side tapered parts 11 b and 12b. The first and second insert sections 11 and 12 are inverted relative to each other, such that the first insert section 11 is disposed so that the tubular part 11a is positioned upward and the tapered part 11 b is positioned downward, while the second insert section 12 is disposed so that the tubular part 12a is positioned downward and the tapered part 12b is positioned upward.

Accordingly, the internal volume of the tank 1 of the full tank capacity A is adapted to provide the full tank capacity B (A>B) by the provision of the first and second insert sections 11 and 12.

As shown in FIG. 1, the first insert section 11 and the second insert section 12 are configured through design of horizontal sectional areas $S1(h)$ and $S2(h)$ with respect to the height $h$ ($h=0$ to $H$), such that the horizontal area of fuel at a given height $h$ of the tank 1 when the insert portion 10 is not provided, compared to when the insert portion 10 is provided, satisfies a particular relation. In particular, assuming that $S(h)$ denotes the horizontal area of fuel when the insert portion 10 is not provided, the horizontal area of fuel when the insert portion 10 is provided is denoted by $[S(h)-\{S1(h)+S2(h)\}]$. The ratio between both areas is determined to be equal to the ratio between the first full tank capacity A when the insertion portion 10 is not provided, and the second full tank capacity B when the insertion portion 10 is provided, as shown by the following equation.

$$S(h):[S(h)-\{S1(h)+S2(h)\}]=A:B \qquad (1)$$

A mold assembly 20 for molding the tank 1 includes an upper mold member 21 and a lower mold member 22 as shown in FIG. 3, and is configured to mold the tank 1 by blow molding by inserting a parison into a cavity 23 at joining portions of the upper mold member 21 and the lower mold member 22.

In this instance, the first and second insert sections 11 and 12 of the above-described insert portion 10 are molded by an insert block unit 30 detachably installed in the cavity 23 of the above-described mold assembly 20.

Namely, the above-described insert block unit 30 includes of a plurality of insert blocks, e.g., an upper mold insert block 31 attached to the upper mold member 21 to protrude toward the lower mold member 22 for molding the first insert section 11, and a lower mold insert block 32 attached to the lower mold member 22 to protrude toward the upper mold member 21 for molding the second insert section 12.

Then, a base end portion 31a of the upper mold insert block 31, i.e., the portion 31a at which the upper mold insert block 31 is received in the upper mold member 21, and a base end portion 32a of the lower mold insert block 32, i.e., the portion 32a at which the lower mold insert block 32 is received in the lower mold member 22, have a minimum draft angle at an outer side. Further, by a leading end portion 31 b of the upper mold insert block 31, i.e., the portion 31 b at which the upper mold insert block 31 is received in the lower mold member 22, and a leading end portion 32b of the lower mold insert block 32, i.e., the portion 32b at which the lower mold insert block 32 is received in the upper mold member 21, the horizontal sectional area of the insert unit 10 is mainly adjusted based on the above-described equation (1).

The base end portion 31 a of the above-described upper mold insert block 31 corresponds to the tubular part 11 a of the first insert section 11, the base end portion 32a of the lower mold insert block 32 corresponds to the tubular part 12a of the second insert section 12, while the leading end portion 31 b of the upper mold insert block 31 corresponds to the tapered part 11 b of the first insert section 11, and the leading end portion 32b of the lower mold insert block 32 corresponds to the tapered part 12b of the second insert section 12.

Accordingly, in this embodiment, the above-described tank 1 attains the first full capacity A when not provided with the above-described insert portion 10, and the second full capacity B when provided with the insert portion 10, and further attains nearly the same full tank height H in each case.

In this instance, in the tank 1 adapted to attain the first full capacity A, as shown in FIG. 4, fuel capacity V-needle indication characteristics $\delta$ are adapted so as to be linear by making fuel capacity V-liquid surface height h characteristics be $\alpha$, gauge characteristics be $\beta$, and fuel gauge indication characteristics $\gamma$ be linear. When tank 1 is provided with insert portion 10 by the above-described method to attain the second full capacity B, fuel capacity V-liquid surface height h characteristics $\alpha'$ is attained, thus enabling sharing of the above-described gauge characteristic $\beta$ and thereby enabling to attain the fuel capacity V-liquid surface height h characteristics $\alpha'$ by using the same fuel gauge.

By the method of manufacturing the fuel tank 1, and by the tank 1 obtained by using the method described above, when the tank 1 of the first full capacity A is provided with the insert portion 10 to attain the second full capacity B, the first full capacity A and the second full capacity B can attain nearly the same full tank height H, thus enabling the full tank positions of the floats for measuring the liquid surface position to be nearly the same, and therefore enabling the fuel gauge for use with the tank 1 of the first full tank capacity A to be shared with the tank 1 of the second full capacity B. For this reason, in case the full tank capacity is decreased from A to B, it is not necessary to provide a new fuel gauge, thus preventing increased costs.

Further, the above-described insert portion 10 is formed by the first insert section 11 and the second insert section 12, the sectional areas $S1(h)$ and $S2(h)$ of the first and second insert sections 11 and 12 with respect to the horizontal direction relative to the height direction is adjusted so that the ratio between the horizontal area of fuel $S(h)$ when the insert portion 10 is not provided, and the horizontal area of fuel $[S(h)-\{S1(h)+S2(h)\}]$ when the insert portion 10 is provided, is equal to the ratio between the first full tank capacity A and the second full tank capacity B (refer to equation (1)), thus improving the accuracy in the needle indication of the fuel gauge when the tank 1 is other than full.

Further, since the above-described tank 1 is adapted to be integrally molded by using the mold assembly 20, and the above-described insert portion 10 including the first and second insert sections 11 and 12 is formed by the insert block unit 30 being detachably installed in the cavity of the mold assembly 20, the tank 1 of the first full capacity A can be molded by detaching the insert block unit 30 from the mold assembly 20, while the tank 1 of the second full capacity B can be molded by installing the insert block unit 30 in the mold assembly 20, thus enabling two kinds of tanks 1 that differ in the full tank capacity to be produced with ease, by providing the insert block unit 30 or not.

Further, since the above-described insert block unit 30 includes a plurality of insert blocks, e.g., the upper mold insert block 31 attached to the upper mold member 21 to protrude toward the lower mold member 22 for molding the first insert section 11 and the lower mold insert block 32 attached to the lower mold member 22 to protrude toward the upper mold member 21 for molding the second insert section 12, the base end portion 31a of the upper mold insert block 31 and the base end portion 32a of the lower mold insert block 32 being configured to have a minimum draft angle at an outer side, and the horizontal sectional area of the insert portion 10 being mainly adjusted by the leading end portion 31 b of the upper mold insert block 31 and the leading end portion 32b of the lower mold insert block 32, the upper mold insert block 31 and the lower mold insert block 32 are tapered toward the respective mold members facing the mold members to which they are attached, thus enabling the mold members to be removed with ease and also enabling the sectional area of the insert portion 30 to be adjusted by the plurality of leading end parts 31 b and 32b such that the sectional area can be adjusted more widely and accurately.

While the invention has been disclosed with reference to certain advantageous embodiments, numerous modifications, alterations, and changes to the described embodiments are possible without departing from the sphere and scope of the invention, as defined in the appended claims and equivalents thereof. For example, while the insert block unit 30 has been described as including two insert blocks, i.e., the first and second insert blocks 31 and 32, the insert block unit can include three or more blocks. Moreover, the shape of the insert block unit is not limited to a bottle shape of a circular cross section, but may be any shape that can attain easy adjustment of the horizontal area of liquid. Also, the invention has been described in one embodiment as pertaining to a fuel tank. However, the invention may pertain to any liquid tank. Accordingly, it is intended that the invention not be limited to the described embodiments, but that it have the full scope defined by the language of the following claims.

This application claims priority from Japanese Patent Application No. 2006-189340, filed 10th July 2006, the contents of which are expressly incorporated herein by reference.

**Claims**

1. A method of adjusting a capacity of a tank, comprising:

    providing a mold assembly for the tank configured to form the tank having a first full capacity; and
    installing an insert block in a cavity of the mold assembly;

    wherein the mold assembly and insert block is arranged to form a tank having a second full capacity, the second full capacity being less than the first full capacity.

2. A method as claimed in claim 1, wherein the insert block is detachably installed in the cavity.

3. A method as claimed in claim 1 or claim 2, wherein a substantially horizontal cross-sectional area of the insert block with respect to a height direction of the tank is designed such that a ratio of a substantially horizontal area of liquid at any of a plurality of heights of the tank between when the insert block is provided and when the insert block is not provided is substantially equal to a ratio between the first full capacity of the tank and the second full capacity of the tank.

4. A method as claimed in any preceding claim, wherein:

    the mold assembly comprises an upper mold member and a lower mold member; and
    the insert block comprises an upper mold insert block detachably attached to the upper mold member and protruding toward the lower mold member, and a lower mold insert block detachably attached to the lower mold member and protruding toward the upper mold member.

5. A method as claimed in claim 4, wherein a base end portion of the upper mold insert block and a base end portion of the lower mold insert block are configured to have a minimum draft angle and wherein a substantially horizontal cross-sectional area of each insert block is adjusted at a leading end portion of the upper mold insert block and a leading end portion of the lower mold insert block.

6. A tank comprising:

    a tank main body; and
    insert means extending substantially vertically within the tank main body,

    wherein a ratio between a substantially horizontal cross-sectional area of the insert means and a substantially horizontal cross-sectional area of an inside of the tank main body from which the cross-sectional area of the insert means is removed is substantially constant.

7. A tank as claimed in claim 6, wherein the tank main body defines a first full capacity without the insert means, and the tank main body defines a second full capacity with the insert means, the first full capacity and the second full capacity attaining substantially the same full tank height.

8. A tank as claimed in claim 6 or claim 7, wherein the insert means comprises a plurality of insert sections, including an upper insert section extending from an upper side to a lower side of the tank main body and a lower insert section extending from the lower side to the upper side of the tank main body.

9. A tank as claimed in any of claims 6 to 8, wherein the insert means is integral at a leading end with the tank main body.

10. A tank as claimed in any of claim 6 to 9 further comprising a liquid level gauge that determines that the tank is full, whether the tank is configured without the insert means, or with the insert means.

11. A vehicle having a tank as claimed in any of claims 6 to 10 or as produced by the method of any of claims 1 to 5.

# FIG.1

# FIG.2

# FIG.3

# FIG.4

**European Patent Office**

**EUROPEAN SEARCH REPORT**

Application Number

EP 07 11 1902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | FR 2 453 012 A (TRANSFORMAT MAT PLASTIQUES) 31 October 1980 (1980-10-31)<br>* figures * | 1<br>6 | INV.<br>B60K15/03 |
| X<br>A | US 6 338 420 B1 (PACHCIARZ MAHLON RICHARD [US] ET AL) 15 January 2002 (2002-01-15)<br>* figures * | 6<br>1 | |
| A | WO 00/47437 A (SALFLEX POLYMERS LTD [CA]) 17 August 2000 (2000-08-17)<br>* the whole document * | 1,6 | |
| A | EP 0 086 425 A (BASF AG [DE]) 24 August 1983 (1983-08-24)<br>* the whole document * | 1,6 | |
| A | EP 0 064 310 A (AG INT SPA [IT]) 10 November 1982 (1982-11-10)<br>* the whole document * | 1,6 | |
| A | DE 199 09 041 A1 (MANNESMANN VDO AG [DE]) 7 September 2000 (2000-09-07)<br>* the whole document * | 1,6 | TECHNICAL FIELDS SEARCHED (IPC)<br><br>B60K |

The present search report has been drawn up for all claims

| Place of search | Date of completion of the search | Examiner |
|---|---|---|
| Berlin | 22 October 2007 | TAMME, H |

EPO FORM 1503 03.82 (P04C01)

## ANNEX TO THE EUROPEAN SEARCH REPORT
## ON EUROPEAN PATENT APPLICATION NO.

EP 07 11 1902

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2007

| Patent document cited in search report | | Publication date | Patent family member(s) | | Publication date |
|---|---|---|---|---|---|
| FR 2453012 | A | 31-10-1980 | NONE | | |
| US 6338420 | B1 | 15-01-2002 | NONE | | |
| WO 0047437 | A | 17-08-2000 | CA | 2360290 A1 | 17-08-2000 |
| | | | EP | 1150853 A1 | 07-11-2001 |
| | | | JP | 2002536586 T | 29-10-2002 |
| | | | US | 6135306 A | 24-10-2000 |
| EP 0086425 | A | 24-08-1983 | DE | 3205592 A1 | 25-08-1983 |
| | | | ES | 278031 U | 16-06-1985 |
| | | | ES | 280520 U | 16-02-1985 |
| | | | JP | 58145521 A | 30-08-1983 |
| | | | US | 4526286 A | 02-07-1985 |
| EP 0064310 | A | 10-11-1982 | BR | 8202577 A | 19-04-1983 |
| DE 19909041 | A1 | 07-09-2000 | BR | 0005191 A | 09-01-2001 |
| | | | WO | 0051858 A1 | 08-09-2000 |
| | | | EP | 1075403 A1 | 14-02-2001 |
| | | | JP | 2002538038 A | 12-11-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006189340 A